# FASCICULE DE BREVET EUROPEEN

(11) **EP 2 504 733 B1**
(45) Date de publication et mention de la délivrance du brevet: **23.09.2015**
(21) Numéro de dépôt: 10801599.1
(22) Date de dépôt: 22.11.2010
(51) Int. Cl.: G02C 13/00

(54) **DISPOSITIF PERMETTANT LES MESURES NÉCESSAIRES AU MONTAGE DES VERRES ET À L'AJUSTAGE DES MONTURES DE LUNETTES DE VUE**
VORRICHTUNG FÜR MESSUNGEN ZUR MONTAGE VON LINSEN UND ANPASSUNG VON ÄRZTLICH VERORDNETEN BRILLENGESTELLEN
DEVICE ENABLING MEASUREMENTS NECESSARY FOR MOUNTING LENSES AND ADJUSTING PRESCRIPTION EYEGLASSES FRAMES

(30) Priorité: 24.11.2009 FR 0905629
(43) Date de publication de la demande: 03.10.2012
(73) Titulaire: Experoptic, 83500 La Seyne-sur-Mer (FR)
(72) Inventeur: Delort, Jean, 83500 La Seyne sur Mer (FR)
(74) Mandataire: Marek, Pierre
(86) Numéro de dépôt international: PCT/FR2010/000778
(87) Numéro de publication internationale: WO 2011/067478

(56) Documents cités:
- EP-A1- 0 567 817
- EP-A1- 2 226 672
- EP-A1- 2 251 734
- WO-A1-98/15222
- WO-A2-01/98862
- DE-A1- 19 752 729
- DE-U1- 9 403 960
- FR-A1- 2 267 736
- FR-A1- 2 497 655
- NL-C- 84 564
- US-A- 2 447 936
- US-A- 4 666 266
- US-A- 5 812 234
- US-A1- 2003 081 173
- US-A1- 2003 123 026
- US-A1- 2009 273 612

## Description

### 1. Domaine de l'invention

La présente invention est comprise dans le domaine général de la vente et de la fabrication des lunettes de vue. Elle vise, en particulier, un dispositif permettant la prise des mesures nécessaires au taillage et au montage des verres, ainsi que l'ajustage des montures de lunettes de vue sans contact direct, physique, entre le porteur et le professionnel qui préparera les lunettes.

### 2. Etat de l'art

Les documents ci-après ont été retenus pour illustrer l'état de la technique et l'arrière plan technologique concernant les procédés permettant la réalisation à distance de lunettes de vue: US 2003/0081173, DE 19752729, US 2009/0273612, WO 01/98862, US 2003/0123026, EP 2 251 734.

Habituellement, la personne qui rencontre des problèmes de vue se rend chez un médecin ophtalmologue afin de diagnostiquer ses pathologies visuelles et les moyens d'y remédier. L'ophtalmologue lui prescrit une ordonnance mentionnant les pathologies dépistées et, si tel est le cas, une prescription pour le port de lunettes de vue avec des verres aux caractéristiques optiques correctrices adéquates.

Le patient se rend ensuite chez un opticien, avec l'ordonnance, pour choisir une monture et l'équiper de verres correcteurs conformément à la prescription de l'ophtalmologue.

Il est nécessaire, pour permettre la préparation de ces verres correcteurs et leur montage dans la monture choisie, d'effectuer des mesures précises.

Ces mesures permettent le bon positionnement des verres. Elles sont actuellement réalisées, d'une part, suivant un axe horizontal essentiellement avec des pupillomètres pour déterminer les « écarts pupillaires » du client et, d'autre part, suivant un axe vertical avec un réglet pour évaluer la hauteur entre le bas des verres dans la monture choisie par le porteur (ce dernier ayant alors ses lunettes sur le nez) et son axe visuel dans une posture dite normale, cette distance étant communément appelée « hauteur pupillaire ».

Lorsque les lunettes correctrices ont été réalisées, le patient se rend à nouveau chez l'opticien, afin que ce dernier puisse, si nécessaire, ajuster les lunettes à la forme de son visage. Cet ajustage comprend le réglage de l'angle pantoscopique (terme connu des professionnels optiques qui correspond à l'inclinaison verticale de la face de la monture quand le porteur regarde à l'horizon, avec une posture naturelle car, spontanément, nous ne regardons pas l'horizon mais un point virtuel au sol situé à une dizaine de mètres devant soi), l'ouverture des tenons et des branches qui assureront le "serrage" de la monture sur la tête du porteur, le coudage des branches autour des oreilles et l'ajustage des plaquettes.

Ces travaux de préparation et de réalisation des lunettes entraînent des coûts relativement élevés pour la clientèle et pour les organismes de couverture sociale.

Il existe cependant sur les réseaux télématiques, par exemple, Internet, des sites proposant de préparer des lunettes correctrices, réalisables en fournissant l'ordonnance de l'ophtalmologue, et sans avoir à se rendre chez l'opticien.

Les sites proposant ce genre de service demandent au patient de choisir le modèle de monture désirée, la couleur de la monture, le type de traitement des verres souhaités, puis d'indiquer l'handicap de l'oeil droit et de l'oeil gauche (sphère, cylindre, axe, addition) selon l'ordonnance établie par l'ophtalmologue.

Enfin, le client doit préciser son écart pupillaire, valeur incontournable pour le positionnement des verres dans la monture, or cette valeur, rarement fournie lors de la visite chez l'ophtalmologue, est mesurée lors du passage chez l'opticien, et reste le plus souvent inconnue du client.

Certains sites proposent d'entrer en contact avec le client, afin qu'un professionnel explique comment mesurer l'écart pupillaire. D'autres sites mettent à disposition du client, en téléchargement libre, un kit de mesure (méthode VIKTORIN ®) à imprimer.

Ce kit de mesure est en papier et peut paraître fastidieux d'utilisation. Il est difficile pour des particuliers d'obtenir des mesures précises de l'écart pupillaire, d'autant plus qu'ils sont par essence "déficients visuels".

De plus, les sites accessibles sur le réseau Internet proposant ces services ne proposent pas de mettre à la disposition de la clientèle des dispositifs permettant d'effectuer précisément et efficacement les réglages susmentionnés, traditionnellement opérés par l'opticien avant que le client récupère ses lunettes.

Les documents ci-après ont été retenus pour représenter l'état de la technique concernant des gabarits pour l'exécution des lunettes de vue : WO 98/15222, US 2 447 936, DE 9403960, EP 2 226 672, US 4 666 266, US 5 812 234, FR 2 497 655, NL 84564, FR 2 267 736, EP 0 567 817.

On connaît par exemple, le document WO98/1522 qui décrit un gabarit de lunettes optiques, en carton, analogue à une monture de lunettes, destiné à la réalisation à distance de montures de lunettes de vue. Ce gabarit comprend deux ouvertures espacées et reliées par un pont et deux branches coulissantes à chaque extrémité latérale dudit gabarit. Des moyens de repérage sont répartis le long des bordures de sa face externe et de ses branches. Il comprend également, sur sa face externe, des fentes destinées à la réception de languettes coulissantes configurées pour les mesures de l'écart pupillaire.

Cependant, on comprend bien que l'utilisateur qui effectue les mesures de l'écart pupillaire avec ce type de gabarit comprenant de nombreuses articulations, ne sera généralement pas en mesure de fournir les valeurs précises nécessaires à la réalisation de la monture des lunettes de vue. L'utilisation de ce dispositif est donc longue, complexe et fastidieuse et peut conduire à des erreurs d'interprétation de l'écart pupillaire. A noter que ce dispositif est très probablement inutilisable par des déficients visuels, alors qu'il leur est destiné, car on leur demande de viser une cible située au loin, à travers un trou d'épingle...

A cela s'ajoute la difficulté technique réelle pour les industriels spécialisés en imprimerie et découpe de cartonnage, de combiner avec précision, en production de série, de l'imprimerie et de la découpe. Or, il convient de rechercher des valeurs de l'ordre de quelques dixièmes de millimètres.

### 3. Objectif de l'invention

Un premier objectif de la présente invention est donc de proposer un gabarit permettant de commander des lunettes optiques correctrices présentant les caractéristiques techniques et esthétiques requises, via Internet, tout en bénéficiant des mêmes prestations que celles attendues lorsque l'on se rend chez un opticien.

Un autre objectif de la présente invention est de réduire significativement le coût à l'achat de lunettes de vue, généralement très élevé, sans déroger à une quelconque exigence de qualité et de précision.

Un des buts de la présente invention est aussi de permettre la réalisation à distance des mesures nécessaires au taillage des verres et à l'ajustage de la monture.

La présente invention concerne un gabarit de lunettes optiques rigide. Ce gabarit est constitué par une pièce faciale, analogue à une monture de lunettes, comprenant deux cercles espacés et reliés par un pont, et sur chaque côté de laquelle est fixée ou apte à être fixée de manière rigide et amovible une branche. Ladite pièce faciale du gabarit est remarquable en ce que l'extrémité de fixation de chacune des branches présente deux pattes d'encliquetage rigides et flexibles disposées l'une en regard de l'autre pour permettre l'encastrement des branches dans la pièce faciale, chaque patte étant dotée d'une tête munie d'une extrémité biseautée pour permettre le rapprochement des pattes lors de leur passage dans l'ouverture oblongue et d'une large base pour retenir la tête à l'extérieur de l'ouverture oblongue.

Ainsi, l'extrémité de fixation permet un encastrement rigide et perpendiculaire des branches dans la pièce faciale du gabarit. Cette disposition est importante, car elle garantit le bon parallélisme de la pièce faciale du gabarit avec une ligne virtuelle qui passerait entre les centres des deux pupilles du client et la bonne cohérence des distances étalons déduites du gabarit et des écarts pupillaires à mesurer. Par ailleurs, de telles garanties seraient compromises avec des gabarits souples, par exemple en carton, ou encore, en feuille plastique découpée.

Selon encore une autre caractéristique importante, chaque bord latéral de la pièce faciale comprend une ouverture oblongue configurée pour recevoir, de manière rigide et amovible, l'extrémité de fixation d'une branche, chaque branche étant excentrée par rapport à l'extrémité de fixation, de sorte que la permutation des branches permet de modifier l'espacement des branches autorisant ainsi une adaptation du gabarit à la morphologie de la tête du client.

Selon encore une autre disposition caractéristique, l'une des pattes d'encliquetage de chaque extrémité de fixation des branches comprend une encoche dont le fond est muni d'un repère, ce repère étant identifiable à travers ladite ouverture oblongue de sorte à déterminer la position de tête large ou de tête étroite d'un client et directement visible sur la vue de face.

Selon encore une autre caractéristique, la face interne de la pièce faciale comprend une pluralité de fentes parallèles, de préférence disposées au-dessus de l'ouverture oblongue, ces fentes coopérant avec un moyen d'accrochage prévu en partie supérieure de l'extrémité de fixation des branches de sorte que la position de ces dernières peut être indexée vers le haut ou vers le bas, en considérant une position verticale du gabarit de lunettes porté par le client, la hauteur des branches étant repérable à travers l'ouverture oblongue de ladite pièce faciale.

Cette disposition permet d'évaluer l'éventuelle variation verticale d'une oreille par rapport à l'autre, et d'un individu par rapport à un autre, ce qui est utile pour l'ajustage final de la monture de lunettes.

Avantageusement, les faces externes et internes des deux branches sont munies de moyens de repérage répartis sur toute leur longueur ou au moins sur la portion postérieure desdites branches.

Selon une caractéristique importante, les moyens de repérage sont constitués par des cibles placées à une distance précise et prédéterminée de l'une de l'autre.

Selon une autre caractéristique importante, chaque branche comprend, dans sa portion de raccordement à la pièce faciale du gabarit, un décrochement orienté vers le bas permettant de dégager une grande partie de la zone du visage, de sorte à rendre visibles les caractéristiques essentielles de l'oeil et de son environnement.

Cette caractéristique essentielle conjuguée avec le faible encombrement du système de fixation sur la pièce faciale permet de voir avantageusement l'oeil, la paupière, l'arcade sourcilière, l'arête du nez et sa jonction avec le profil du front.

Selon une autre caractéristique de l'invention, chaque branche comprend, dans sa portion de raccordement à la pièce faciale du gabarit, un repère se trouvant dans l'alignement de la bordure rectiligne inférieure de la branche en contact avec l'oreille du client.

### 4. Liste des figures

Les buts, caractéristiques et avantages ci-dessus, et d'autres encore, ressortiront mieux de la description détaillée qui suit et des dessins annexés dans lesquels :
La figure 1 est une vue en perspective illustrant le gabarit de lunettes selon l'invention.
La figure 2 est une vue en perspective illustrant un rhinomètre susceptible d'être utilisé avec le gabarit, le rhinomètre ne faisant pas partie de l'invention.
La figure 3 est une vue de face du gabarit de lunettes.
La figure 4 est une vue de côté du gabarit de lunettes.
La figure 5 est une vue de dessus du gabarit de lunettes illustrant les branches dans une position de tête large.
La figure 6 est une vue analogue à la figure 5 illustrant les branches dans une position de tête étroite.
La figure 7 est une vue de face du gabarit de lunettes positionné sur la tête d'un client.
La figure 8 est une vue de côté de la figure 7.
La figure 9 est une vue partielle en perspective et agrandie des extrémités des deux branches du gabarit de lunettes.
La figure 10 est une vue partielle, en perspective et agrandie d'une extrémité d'une branche du gabarit de lunettes.
La figure 11 est une vue partielle, en perspective et de détail d'un côté de la face interne de la pièce faciale du gabarit de lunettes.
La figure 12 illustre une vue partielle et de côté du gabarit de lunettes avec les branches en position haute.
La figure 13 est une vue analogue à la figure 12 illustrant les branches du gabarit en position basse.
Les figures 14 à 19 mentionnées ci-après ont trait au rhinomètre qui ne fait pas partie de l'invention.

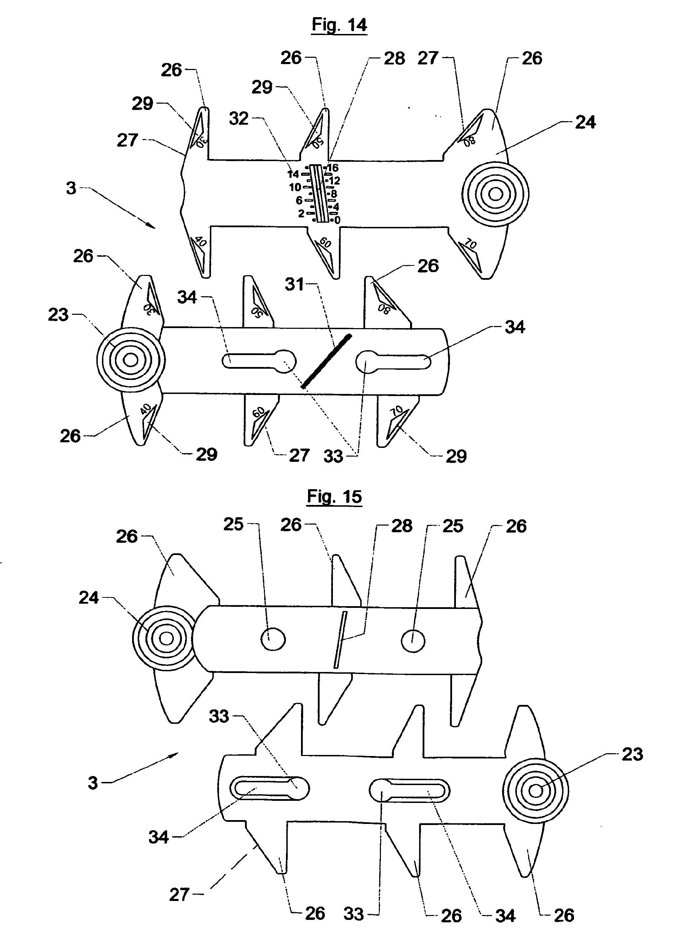

La figure 14 est une vue éclatée et de face du rhinomètre constitué de deux pièces.
La figure 15 est une vue éclatée et arrière du rhinomètre constitué des deux pièces.

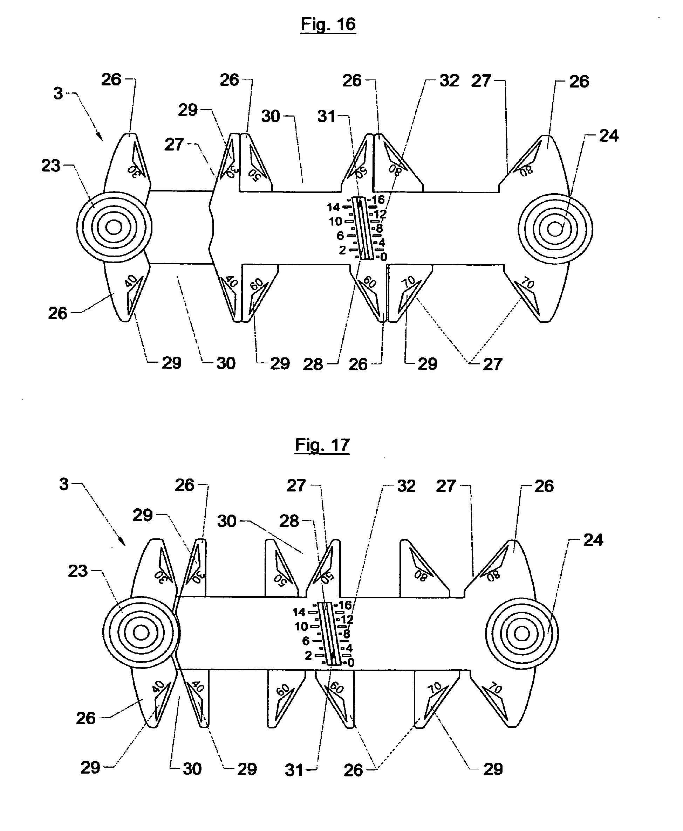

La figure 16 est une vue de face du rhinomètre en position d'ouverture maximum.
La figure 17 est une vue de face du rhinomètre en position d'ouverture minimum.

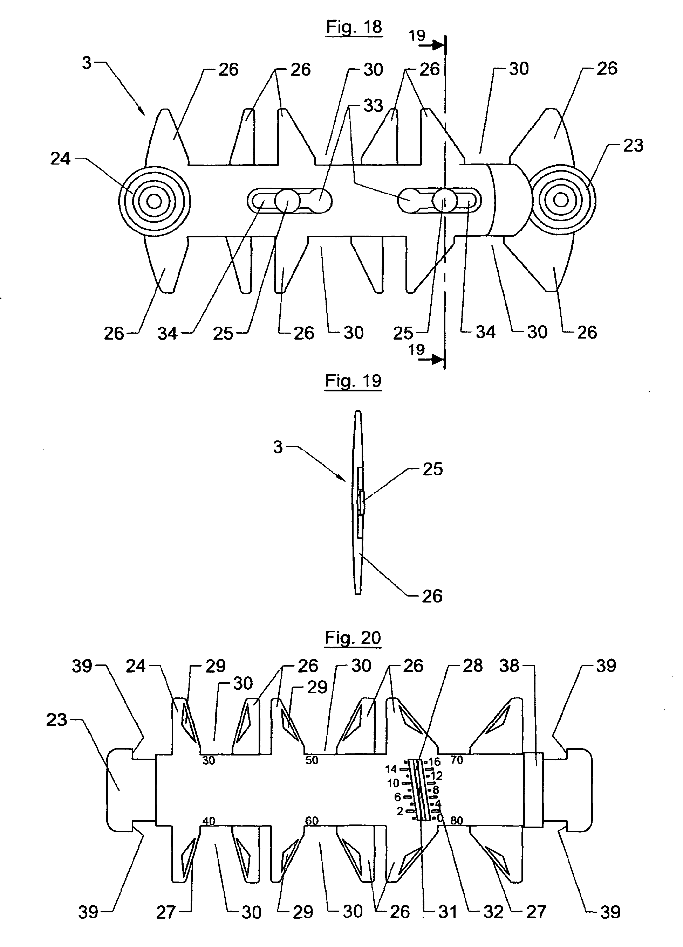

La figure 18 est une vue arrière de la figure 17.
La figure 19 est une vue en coupe transversale selon la ligne 19-19 de la figure 18.
La figure 20 illustre un autre mode de réalisation du rhinomètre selon l'invention.

### 5. Description détaillée

On se réfère auxdits dessins pour décrire un exemple intéressant, quoique nullement limitatif, de réalisation d'un dispositif de mesure et d'un procédé de mise en oeuvre selon l'invention.

Dans l'exposé qui suit et dans les revendications, le terme « lunettes de vue » désigne plus particulièrement des lunettes constituées d'une monture équipée de verres correcteurs et destinées à remédier à un défaut de vision ; par extension, il s'applique à tout type de lunettes de vue, y compris les lunettes solaires avec ou sans corrections.

De même, dans la présente description, sont utilisés des mots tels que "supérieur", "inférieur", "latéral", par référence à la position du gabarit lorsque celui-ci est placé sur un visage, tel une paire de lunettes classique.

D'autre part, l'expression, "face externe" désigne la face visible du gabarit lorsque ce dernier est positionné sur la face du patient, la "face interne" désignant la face opposée de la "face externe". Le patient sera appelé également « client » dans la description et les revendications.

### Le dispositif de mesure ou kit de mesure

Le gabarit de l'invention fait partie d'un dispositif de mesure ou kit de mesure qui peut comprendre en outre un rhinomètre. Le gabarit comprend deux éléments rigides, légers et précis, grâce auxquels il est possible de récupérer, au moyen de deux prises de vues photographiques et d'un relevé en lecture directe, les dimensions et informations nécessaires et suffisantes pour, d'une part, permettre l'ajustage complet d'une monture de lunettes sur la face d'un client et, d'autre part, le centrage des verres correcteurs après avoir déterminé, au préalable, la correction concernant les défauts visuels de ce dernier.

Le gabarit et le rhinomètre sont spécialement conçus pour permettre la commande et la vente à distance de montures, en particulier, via Internet.

### Le gabarit de lunettes

De manière avantageuse mais non limitative, le gabarit 2 de lunettes est réalisé en matière plastique injecté rigide ou semi-rigide. Il est démontable et léger de sorte à être facilement expédié via les services postaux.

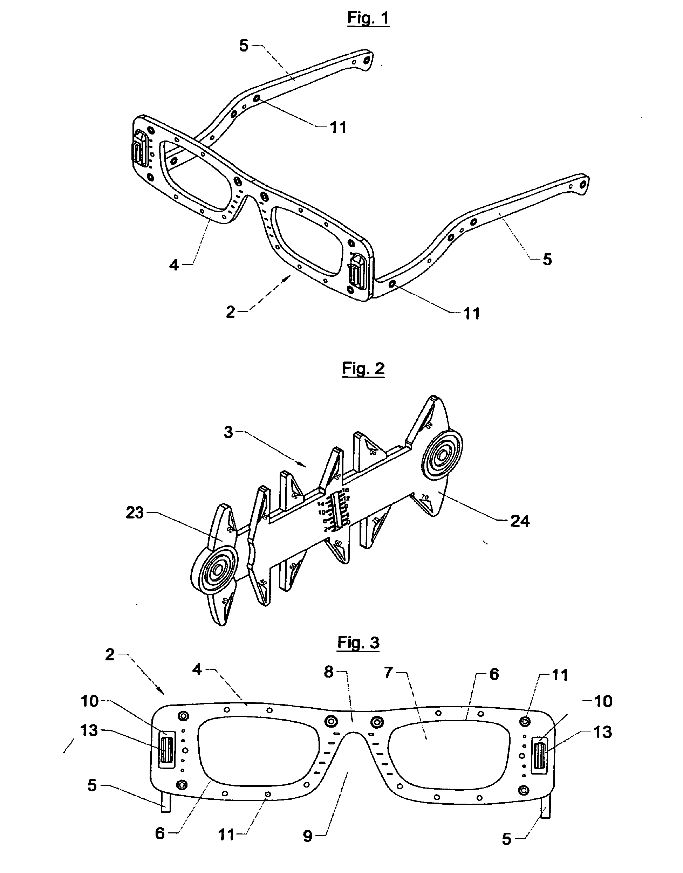

Le gabarit 2 de lunettes, comme on peut le voir sur les figures 1 et 3, est constitué d'une pièce faciale 4 et de deux branches amovibles 5. La pièce faciale 4 du gabarit 2 affecte, de préférence, une forme sensiblement rectangulaire d'épaisseur constante, et comprend, de part et d'autre de son axe médian, deux parties ou "cercles" 6 espacés et reliés par un pont 8.

Cette pièce faciale 4 comporte, dans sa partie inférieure médiane, une échancrure 9 permettant la pose du gabarit 2 sur le nez d'un sujet. Plus précisément, le pont 8 de la pièce faciale 4 est conformé pour pouvoir chevaucher le nez du client.

Chaque cercle 6 délimite une ouverture 7 qui peut présenter une forme sensiblement trapézoïdale, de sorte que lors d'une photographie en vue de face, par exemple, on distingue le repli palpébral du patient. Toutefois, les cercles 6 peuvent présenter une forme elliptique ou une forme quelconque délimitant une ouverture 7 suffisamment large pour apercevoir les yeux et leurs différentes caractéristiques.

Avantageusement, la bordure supérieure de la pièce faciale 4 est rectiligne. Cependant, cette bordure pourrait alternativement présenter une forme curviligne.

La pièce faciale 4 du gabarit 2 est munie de moyens de repérage 11 précisément positionnés sur la surface externe de ses deux cercles 6.

Chaque bord latéral de la pièce faciale 4 comprend une ouverture oblongue verticale 10 conformée pour recevoir et retenir une branche 5. Les branches 5 sont sensiblement d'épaisseur constante et sont destinées à être posées sur l'oreille du patient. Avantageusement, elles s'amincissent légèrement vers la portion de raccordement pour être rigide, souple et élastique en même temps.

Les branches 5 sont solidarisées, de manière rigide et amovible, à la pièce faciale 4, au moyen de leur extrémité 13 appelée ci-après « extrémité de fixation ». Cette extrémité 13 est, selon l'exemple illustré, dotée de deux pattes d'encliquetage 14 disposées l'une en regard de l'autre. Plus précisément, chacune des pattes 14 est dotée d'une tête 35 présentant une extrémité biseautée 36 pour faciliter l'insertion et le rapprochement des pattes 14 lors de leur passage dans l'ouverture oblongue 10. Ces têtes 35 comportent également, une large base 37 constituant un moyen de retenue de la tête 35 à l'extérieur de l'ouverture oblongue 10. Les pattes 14 étant rigides et flexibles, les branche 5 peuvent se clipser et s'encastrer dans l'ouverture oblongue verticale 10 de la pièce faciale 4 afin de garantir d'une part, une liaison rigide entre les branches 5 et la pièce faciale 4 et d'autre part, un parallélisme entre la pièce faciale 4 du gabarit de lunettes 2 et une ligne virtuelle passant par le centre des pupilles du client.

Avantageusement, l'ouverture 10 est de forme rectangulaire.

L'ouverture 10 pourrait, cependant, avoir d'autre forme, par exemple, quadrangulaire, circulaire, ovale, etc.

La face externe de chacune des branches 5 est également munie de moyens de repérage 11 répartis précisément et régulièrement ou non sur au moins une portion postérieure de sa longueur.

De manière préférée, les moyens de repérages 11 sont répartis sur toute la surface des deux faces interne et externe des branches 5 de sorte à toujours laisser visibles les moyens de repérage 11 à l'avant et à l'arrière des oreilles du client.

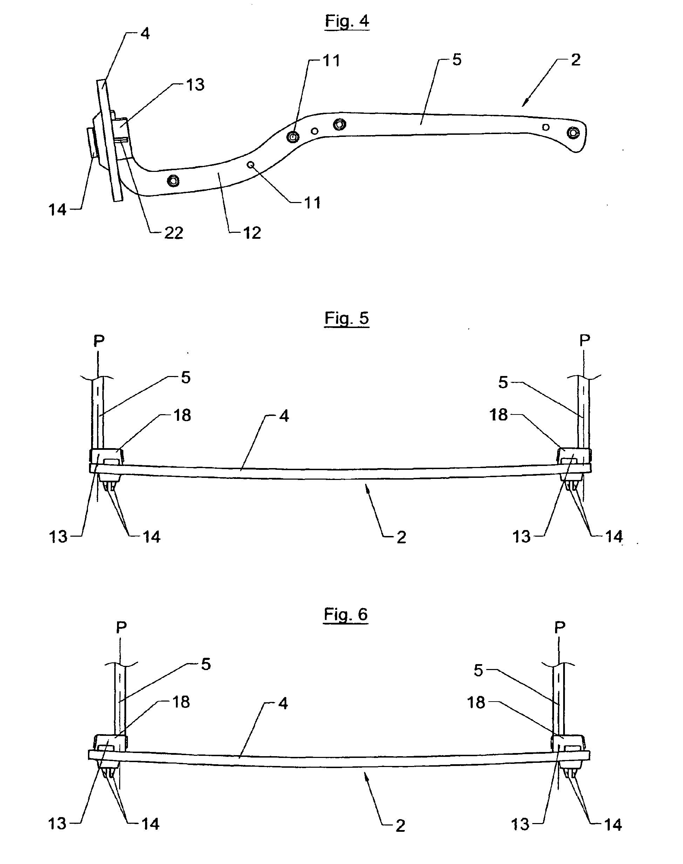

Selon une autre caractéristique de l'invention, les branches 5, et en particulier l'extrémité de fixation 13 de celles-ci, coopérant avec l'ouverture oblongue verticale 10 de la pièce faciale 4, est conformée pour permettre leur permutation (droite ou gauche) à l'autre (gauche ou droite). Grâce à cette disposition, le gabarit 2 de lunettes peut être adapté à la tête d'un sujet, selon que celui-ci présente une tête « large » ou une tête « étroite ». Pour permettre cette adaptation, l'axe de l'extrémité de fixation 13 des branches 5 destinée à s'encastrer dans l'une des ouvertures oblongues 10 de la pièce faciale 4 comporte un épaulement 18 muni du couple de patte d'encliquetage 14. Ce couple de pattes d'encliquetage 14 est excentré par rapport par rapport au plan P dans lequel est comprise la branche 5. Grâce à ce décalage ou excentrage, l'espace séparant les deux branches 5 lorsque ces dernières sont fixées sur la pièce faciale 4 peut être plus ou moins grand ou petit selon la position à droite ou à gauche occupée par chacune des branches 5. L'espace entre les branches 5 est donc plus grand lorsque ces dernières se trouvent en position de tête large et plus petit lorsque les branches 5 se trouvent en position de tête étroite (voir sur les figures 5 et 6).

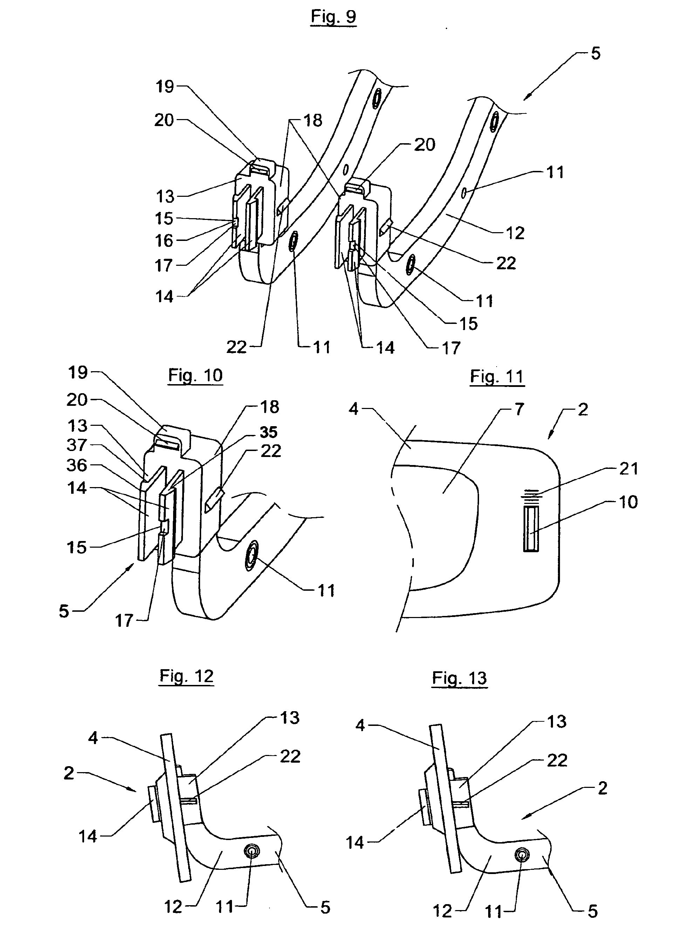

Par ailleurs, l'une des pattes 14 de l'extrémité de fixation 13 des branches 5 est pourvue d'une encoche 15 dont le fond 16 présente un repère 17 (voir figures 9 et 10) qui est facilement détectable et identifiable à travers l'ouverture 10 de la pièce faciale 4 du gabarit 2, et qui permet, par conséquent, d'identifier le sens de montage des branches 5 pour une tête large ou une tête étroite directement sur la prise de vue de face. Cette disposition apparait être une précision majeure pour l'ajustage final de la monture.

Selon une autre caractéristique de l'invention illustrée sur les figures 9 à 13, la partie supérieure 19 de l'extrémité de fixation 13 de la portion de raccordement des branches 5 est équipée d'une languette 20 destinée à s'enchâsser dans l'une des fentes d'une pluralité de fentes 21 horizontales et parallèles prévues dans la face interne de la pièce faciale 4 du gabarit 2, au-dessus de l'ouverture oblongue 10. Cette disposition autorise une indexation des branches 5 vers le haut ou vers le bas, en considérant une position verticale du gabarit 2 de lunettes porté par le client. Elle est avantageuse en ce qu'elle permet de tenir compte des différences de hauteur d'une oreille à l'autre et pour chaque individu. Le client ajustera, par exemple, le gabarit 2 sur son visage de sorte à le rendre bien perpendiculaire à son visage, en déplaçant verticalement l'une ou l'autre des branches 5 et en s'assurant que le gabarit 2 porte bien sur le nez et les deux oreilles.

La position en hauteur des branches 5 est identifiable et repérable à travers les ouvertures oblongues 10 de la pièce faciale 4 et sur la vue de face par exemple illustrée sur la figue 7, ce qui permet d'évaluer l'ajustage à réaliser pour la monture finale.

Avantageusement, la languette 20 de la portion de raccordement des branches 5, présente une section triangulaire, une épaisseur de l'ordre de 2 à 5 mm, et une hauteur de l'ordre de 3 à 10 mm, lui permettant d'être engagée sans jeux notables dans l'une des fentes 21. Cependant, cette languette 20 peut présenter une forme quadrangulaire, par exemple.

Bien entendu, la pluralité de fentes 21 pourrait se trouver en-dessous ou sur les côtés de l'ouverture oblongue 10.

Selon une caractéristique importante de l'invention, les moyens de repérage 11 sont constitués par des cibles placées à une distance précise et prédéterminée l'une de l'autre. Plus précisément, ces cibles sont constituées de cercles et leur positionnement est fixe, extrêmement précis et non modifiable. Celles-ci doivent être suffisamment grosses et visibles, par exemple, en forme de pastille, de sorte à permettre une bonne interprétation des données lors de la remise à l'échelle des prises de vues photographiques au moyen d'un logiciel de conception assistée par ordinateur. Ces cibles sont rapportées par gravure ou impression sur les différentes faces concernées du gabarit 2 de lunettes.

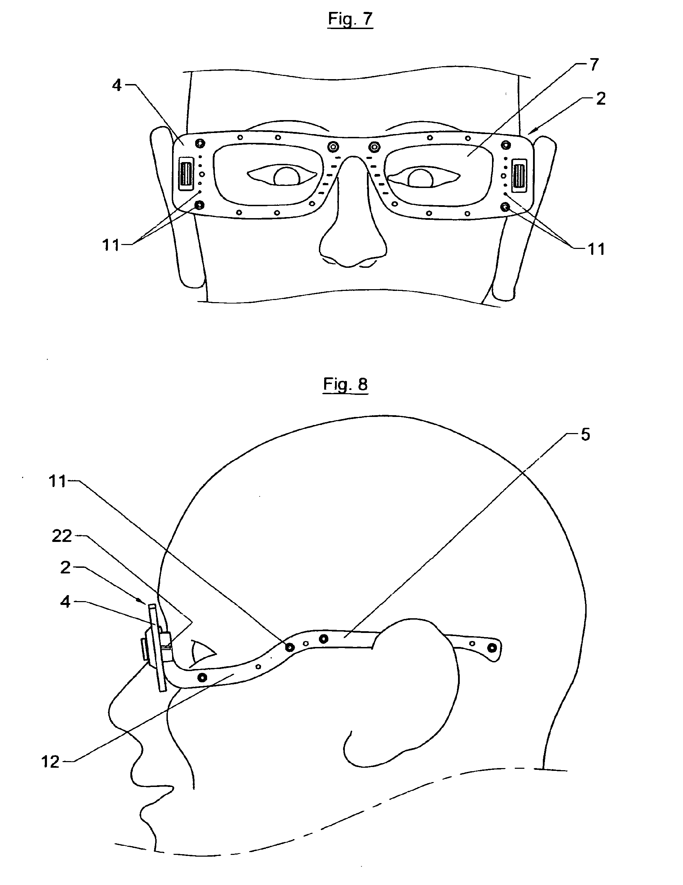

Selon encore une autre caractéristique avantageuse de l'invention, illustrée sur les figures 4 et 8, la branche 5 comprend, dans sa portion de raccordement à la pièce faciale 4 du gabarit 2, un profond décrochement 12 orienté vers le bas permettant de dégager une grande partie de la zone du visage de sorte à rendre visibles les caractéristiques essentielles de l'oeil et de son environnement. Ce profil particulier donné à la branche 5 permet, en particulier, d'évaluer, sans obstacle, l'enfoncement des yeux, l'épaisseur des paupières, la hauteur de l'arcade sourcilière, la longueur des cils, etc, autant de caractéristiques personnelles à chaque individu. En outre, la partie supérieure du visage étant dégagée, grâce à ce décrochement 12, il est possible de reconstituer la ligne du front et sa jonction avec l'arête du nez.

Il est également possible de définir l'axe des pupilles du client par rapport à la branche 5 du gabarit 2 à l'aide d'un repère 22 disposé dans l'alignement exact de la bordure rectiligne inférieure de la branche 5 en contact avec l'oreille du client. Ce repère 22 peut être utile dans le réglage de l'angle pantoscopique. D'autre part, grâce au profil particulier des branches 5, le gabarit 2 permet d'ajuster, à distance, l'ouverture des branches de la monture de lunettes finale, de la hauteur des tenons et du coudage des branches au bon endroit autour des oreilles (cartilage auriculaire).

Toutes ces observations sont essentielles à la réalisation d'un bon ajustage personnalisé de la monture de lunettes.

### Le rhinomètre

La description qui suit à trait à un rhinomètre pouvant être utilisé conjointement au gabarit, mais qui ne fait pas partie de l'invention.

Le rhinomètre 3 illustré, plus précisément, sur les figures 14 à 19, est constitué de deux pièces 23, 24 coulissant l'une contre l'autre au moyen de leur surface plane. Les pièces 23, 24 sont constituées, par exemple, d'une pièce arrière 23 et d'une pièce faciale 24. Des moyens permettent, d'une part, de maintenir les pièces 23, 24 plaquées l'une contre l'autre et, d'autre part, le guidage de celles-ci lors de leurs mouvements axiaux réciproques.

Selon l'exemple représenté, les pièces 23, 24 sont maintenues ensemble par deux pions 25 disposés sur la face antérieure de la pièce arrière 23. Ces pions 25 coulissent, respectivement, le long de deux ouvertures allongées 34 ménagées dans la pièce faciale 24 et comprenant à l'une de leurs extrémités, une portion circulaire 33 par laquelle ces pions 25 ont été insérés. Les portions circulaires 33 comprennent sensiblement le même diamètre que les pions 25 de sorte à permettre l'insertion de ces derniers à travers les ouvertures allongées 34.

Selon un autre mode de réalisation, illustré sur la figure 20, les moyens de maintien des pièces 23, 24 du rhinomètre 3 sont constitués d'une bague ou collier 38 pouvant être disposée autour des portions d'extrémité adjacentes des pièces 23, 24, ces bagues ou colliers 38 servant au guidage des pièces 23, 24 coulissantes. A cet effet, ces dernières sont munies, à l'une des extrémités, d'une butée 39 coopérant avec la bague ou collier 38 voisin, pour éviter une désolidarisation des pièces 23, 24.

Chaque pièce 23, 24 est munie d'ailettes 26 comportant un bord penté 27. Les bords pentés 27 des ailettes 26 de l'une des pièces 23, 24 ont une inclinaison inverse de celle des ailettes 26 de l'autre pièce 24, 23. Chaque ailette 26 de l'une desdites pièces 23, 24 forme avec une ailette 26 de l'autre pièce 24, 23, un couple d'ailettes 26 dont l'espacement 30 est variable par coulissement réciproque des pièces 23, 24 et dont les bords pentés 27 forment entre eux un angle variable de sorte à constituer un dispositif permettant de mesurer l'angle d'évasement du nez et la largeur de l'arête du nez du client.

Lorsque le dispositif est assemblé, le bord penté 27 de chaque ailette 26, de la pièce arrière 23 par exemple, est judicieusement positionné en vis-à-vis du bord penté de même pente de la pièce faciale 24 du rhinomètre 3.

Les ailettes 26 sont munies de repères 29 apposés sur leurs bords pentés 27 et permettant de déterminer l'angle d'évasement du nez du client.

La pièce arrière 23 comporte sur sa face antérieure, une ligne diagonale 31 très judicieusement positionnée et repérable à travers une fente diagonale 28 de la pièce faciale 24, la fente diagonale 28 est inversement orientée par rapport à la ligne diagonale 31 et est bordée de repères 32 constituant un système de mesure. En fonction de la position d'une pièce 23, 24 par rapport à l'autre 24, 23, et donc des ailettes 26 de chaque couple d'ailettes 26 de mesures d'angles, cette disposition permet d'avoir la valeur de la largeur de l'arête du nez du client par simple lecture directe à travers la fente 28 bordée de repères 32 qui autorise la visibilité d'une mince portion de la ligne diagonale 31.

Ces repères 32 sont matérialisés par les divisions d'un système de mesure quelconque, comme par exemple le système métrique, le système de mesure anglo-saxon, ou tout autre système de mesure.

La fente 28 bordée de repères 32 pourrait être disposée verticalement par rapport à la pièce faciale 24.

Chaque pièce 23, 24 est munie d'une pluralité d'ailettes 26 s'étendant à partir de son bord supérieur, et d'une pluralité d'ailettes 26 s'étendant à partir de son bord inférieur.

Selon l'exemple représenté, le rhinomètre 3 comporte six couples d'ailettes 26 (trois en partie supérieure et trois en partie inférieure), c'est-à-dire six couples de mesures ayant une valeur angulaire différente, de sorte à former une pluralité de moyens de mesures de l'angle d'évasement du nez et de la largeur de l'arête du nez du client. Dans ce but, l'inclinaison, des bords pentés 27 des ailettes 26 de chaque couple est différente de l'inclinaison des bords pentés 27 des ailettes 26 des autres couples. Chacun de ces couples d'ailettes 26 est prévu pour mesurer une valeur d'angle spécifique, par exemple, 30°, 40°, 50°, 60°, 70°, 80°, ce qui procure une gamme étendue de mesures possibles.

Ce rhinomètre 3 permet de déterminer à la fois l'angle d'évasement du nez ainsi que la largeur d'arête du nez du client. La connaissance de ces deux valeurs, angle et largeur d'arête, permettra, par la suite, l'ajustage précis des plaquettes. Plus précisément, il permet d'effectuer un relevé direct et précis à l'emplacement exact où se positionneront les plaquettes de la monture de lunettes lors de son usage.

En ce qui concerne la prise des mesures avec le rhinomètre 3, le client se fera avantageusement aider par un tiers pour positionner celui-ci sur son nez, perpendiculairement à la ligne du nez (en vue de profil) et au plus près de la jonction du nez avec le front. Il s'agira alors de choisir l'angle d'évasement correspondant le mieux au nez du client et de faire glisser délicatement les pièces 23, 24 de sorte à établir un contact entre le nez et les bords pentés 27 et entre l'arête du nez et la partie centrale du rhinomètre 3. Les ailettes 26 toucheront le nez à l'emplacement exact où s'appuieront ultérieurement les plaquettes de la monture après ajustement. Ce positionnement étant réalisé sur le nez du sujet, il suffit de relever l'angle d'évasement et la largeur d'arête, en lecture directe dans la fente 28 bordée de graduation (repère 32).

Ce rhinomètre 3 peut être constitué en tous matériaux adéquats tels que, carton, plastique découpé ou injecté, etc.

### Le procédé

La description qui suit illustre un procédé d'utilisation du gabarit et du rhinomètre. Le procédé ne fait toutefois pas partie de l'invention.

Selon le procédé, la personne qui désire développer un système de vente à distance de lunettes de vue crée un site Internet proposant différentes montures de lunettes de vue. Ces montures sont représentées avec leurs photos réelles et corrélativement elles sont modélisées (reproduction de l'image de la monture réelle) à la manière d'une feuille de calque en vue de face et en vue de profil. Ces montures modélisées sont désignés par le terme « calque » dans la suite de la description et des revendications.

Le client qui connaît des problèmes de vue se rend chez un médecin ophtalmologue afin de déterminer la cause de ses problèmes. L'ophtalmologue lui prescrit alors une ordonnance mentionnant la pathologie dépistée et, si tel est le cas, des indications prescrivant le port de lunettes comprenant des verres dotés des caractéristiques optiques adéquates.

Ce client se rend sur ce site Internet afin de commander une paire de lunettes, dont les verres ont été prescrits par un ophtalmologue.

Le client indique, en ligne, le modèle de monture qu'il souhaite, et renseigne le fournisseur sur la prescription faite par l'ophtalmologue.

Le propriétaire du site Internet envoie gratuitement un dispositif de mesure 1 innovant après consultation dudit site par le client. Le dispositif de mesure 1 comprend, d'une part, un gabarit 2 de lunettes optiques comportant une pièce faciale 4 et des branches 5 susceptibles d'occuper deux positions d'espacement entre elles, ce gabarit étant conformé pour permettre le calcul de la valeur de l'écart pupillaire ainsi qu'un bon ajustement de la monture de lunettes finale à distance et, d'autre part, un rhinomètre 3 conformé pour permettre une lecture directe de l'angle d'évasement du nez et de la largeur de l'arête du nez ; ce rhinomètre comportant les caractéristiques techniques mentionnées précédemment dans la présente description.

Le client établit lui-même, ou fait réaliser par un tiers, deux prises de vues photographiques, chacune des prises de vues ayant un rôle à jouer, soit dans l'ajustage de la monture conformément à la face du client, soit dans le montage et le taillage des verres correcteurs adéquats dans la monture.

Le client chausse le gabarit 2 sur son visage et effectue les prises de vues comportant une photographie de sa tête vue de face (figure 7) prise à plus de 2,5 m et une photographie de sa tête vue de profil (figure 8) prise à environ 1 m.

Le client réalise également, au moyen du rhinomètre 3, les mesures de la valeur de l'angle d'évasement de son nez ainsi que les mesures de la largeur de l'arête du nez en effectuant un relevé en lecture directe de ces valeurs afin de modéliser la forme du nez du client, en particulier dans la zone ou s'appuieront les plaquettes.

Le site Internet réceptionne la commande, les prises de vues et les différentes mesures en lecture directe qui lui sont adressées par le client.

Le propriétaire du site Internet établit ou fait établir, sous son contrôle, un traitement des données envoyées par le client. Ce traitement intervient au moyen d'un logiciel configuré pour permettre l'analyse des informations transmises par le client et des instructions données pour la réalisation de la monture répondant au choix et à la morphologie du client.

Enfin, les lunettes de vue sont réalisées sur la base des informations résultant de ce traitement.

Selon une importante caractéristique du procédé selon l'invention, ce traitement réalisé au moyen du logiciel comprend les étapes suivantes :
- remise à l'échelle des prises de vues photographiques du client portant le gabarit 2, à l'aide des moyens de repérage 11 situés de manière prédéterminée sur la pièce faciale 4 et sur les branches 5, lesdites prises de vues photographiques comportant une vue de face prise à deux mètres cinquante au moins et une vue de profil prise à un mètre environ;
- détermination de la valeur précise de l'écart pupillaire (ou des deux demi-écarts pupillaires) par rapport à l'axe virtuel de symétrie du gabarit 2 et de la mesure de la distance entre les centres des pupilles de chaque oeil du client déduite des moyens de repérage 11 de la pièce faciale 4 du gabarit 2 sur la prise de vue de face remise à l'échelle et également à l'aide des moyens de repérage 11 se trouvant sur les branches 5 ;
- détermination de la valeur de la hauteur pupillaire optimale au moyen des prises de vues de face et de profil comprenant :
   ▪ superposition, d'une part, du calque résultant de la modélisation en vue de face de la monture choisie par le client et, d'autre part, de la prise de vue de face du client, lesdites vues de face de la monture modélisée et du client étant remises à l'échelle,
   ▪ superposition, d'une part, du calque résultant de la modélisation en vue de profil de la monture choisie par le client et, d'autre part, de la prise de vue de profil du client de sorte à confirmer la bonne position de la monture sur la face du client,
      ces superpositions du calque prenant en compte la position du pont de la monture choisie par rapport au nez du client, les distances entre l'oeil, les paupières et les verres,
   ▪ évaluation de la valeur de la hauteur pupillaire idéale sur la vue de face, cette hauteur correspondant à la distance entre le bas du calque de la monture et l'axe pupillaire ;
- détermination de l'ouverture à donner aux tenons et aux branches de la paire de lunettes à réaliser grâce aux informations recueillies sur la prise de vue de face remise à l'échelle, à l'aide des moyens de repérage 11 se trouvant sur la pièce faciale 4 du gabarit 2, de l'espacement adopté par le client pour le montage des branches 5 du gabarit 2, et de la dimension totale du gabarit 2 ;
- détermination de la zone de coudage des branches de la monture au moyen de la vue de profil remise à l'échelle, du calque en vue de profil de la monture choisie, de la distance entre le pont de la monture choisie par le client et un pli cartilagineux particulièrement caractéristique de l'oreille visible en vue de profil ;
- détermination de la bonne position des plaquettes comprenant :
   ▪ un relevé de la distance entre le pont et le nez du client au moyen de la prise de vue de profil et le calque en vue de profil de la monture de lunettes choisie par le client,
   ▪ un ajustement progressif des plaquettes de la monture choisie en positionnant ces lunettes sur un "faux nez" ayant la même largeur d'arête et même angle d'évasement que le nez du client.

La bonne position des plaquettes se détermine par l'orientation, le serrage, et par la déformation plastique des bras des plaquettes, de sorte à faire poser bien à plat chaque plaquette sur les deux faces d'un « faux nez » réalisé au préalable et ayant les mêmes caractéristiques (largeur d'arête et angle d'évasement) que celles relevées grâce au rhinomètre 3 fourni au client.

Par approches successives, il s'agit de rendre les plaquettes parfaitement parallèles aux faces du nez du client de sorte à assurer une assise confortable de la monture sur le nez du porteur. Par ailleurs, ce réglage suppose la constitution de « faux nez » pour couvrir l'éventail des combinaisons possibles comprenant les caractéristiques propres à chacun, à savoir largeur d'arête et angle d'évasement du nez.

Une fois ces mesures réalisées, le propriétaire du site envoie au client la paire de lunettes correctrices commandée.

## Revendications

1. Gabarit rigide pour la réalisation de lunettes de vue, le gabarit (2) étant constitué par une pièce faciale (4), analogue à une monture de lunettes, comprenant deux cercles (6) espacés et reliés par un pont (8), et sur chaque côté de laquelle est fixée ou apte à être fixée de manière rigide et amovible une branche (5), ladite pièce faciale (4) du gabarit (2) étant munie de moyens de repérage (11) précisément positionnés sur la surface externe de ses deux cercles (6), **caractérisé en ce que** chaque bord latéral de la pièce faciale (4) comprend une ouverture oblongue verticale (10) configurée pour recevoir, de manière rigide et amovible, l'extrémité de fixation (13) d'une branche (5), l'extrémité de fixation (13) de chacune des branches (5) présente deux pattes d'encliquetage (14) rigides et flexibles disposées l'une en regard de l'autre pour permettre l'encastrement des branches (5) dans la pièce faciale (4), chaque patte (14) étant dotée d'une tête (35) munie d'une extrémité biseautée (36) pour permettre le rapprochement des pattes (14) lors de leur passage dans l'ouverture oblongue (10) et d'une large base (37) pour retenir la tête (35) à l'extérieur de l'ouverture oblongue (10).

2. Gabarit selon la revendication 1, **caractérisé en ce que** chaque branche (5) est excentrée par rapport à l'extrémité de fixation (13), de sorte que la permutation des branches permet de modifier l'espacement des branches (5) autorisant ainsi une adaptation du gabarit (2) à la morphologie de la tête du client.

3. Gabarit selon l'une quelconque des revendications 1 ou 2, **caractérisé en ce que** l'une des pattes d'encliquetage (14) de chaque extrémité de fixation (13) des branches (5) comprend une encoche (15) dont le fond (16) est muni d'un repère (17), ce repère (17) étant identifiable à travers ladite ouverture oblongue (10) de sorte à déterminer la position de tête large ou de tête étroite d'un client.

4. Gabarit selon l'une quelconque des revendications 1 à 3, **caractérisé en ce que** la face interne de la pièce faciale (4) comprend une pluralité de fentes (21) parallèles, de préférence disposées au-dessus de l'ouverture oblongue (10), ces fentes (21) coopérant avec un moyen d'accrochage (20) prévu en partie supérieure (19) de l'extrémité de fixation (13) des branches (5), de sorte que la position de ces dernières peut être indexée vers le haut ou vers le bas, en considérant une position verticale du gabarit (2) de lunettes porté, et **en ce que** la position en hauteur des branches (5) est repérable à travers l'ouverture oblongue (10) de ladite pièce faciale (4).

5. Gabarit selon l'une quelconque des revendications 1 à 4, **caractérisé en ce que** les faces externes et internes des deux branches (5) sont munies de moyens de repérage (11) répartis sur toute leur longueur ou au moins sur la portion postérieure desdites branches (5).

6. Gabarit selon l'une quelconque des revendications 1 à 5, **caractérisé en ce que** les moyens de repérage (11) sont constitués par des cibles placées à une distance précise et prédéterminée de l'une de l'autre.

7. Gabarit selon l'une quelconque des revendications 1 à 6, **caractérisé en ce que** chaque branche (5) comprend, dans sa portion de raccordement à la pièce faciale (4) du gabarit (2), un décrochement (12) orienté vers le bas permettant de dégager une grande partie de la zone du visage de sorte à rendre visibles les caractéristiques essentielles de l'oeil et de son environnement.

8. Gabarit selon l'une quelconque des revendications 1 à 7, **caractérisé en ce que** chaque branche (5) comprend, dans sa portion de raccordement à la pièce faciale (4) du gabarit (2), un repère (22) se trouvant dans l'alignement de la bordure rectiligne inférieure de la branche (5) en contact avec l'oreille du client.

## Patentansprüche

1. Starre Schablone für die Herstellung von Sichtbrillen, wobei die Schablone (2) einen erstere Maskenkörper (4), ähnlich einem Brillenrahmen aufweist, der zwei zueinander beabstandet und durch eine Brücke (8) verbundene Kreise aufweist (6) und an jeder Seite derselben ein starrer und lösbar befestiger Schenkel (5) fixiert oder fixierbar ist, wobei der Maskenkörper (4) der Schablone (2) mit Positionierungsmitteln (11), die präzise an der Außenfläche der beiden Kreise (6) positioniert sind, ausgebildet ist, **dadurch gekennzeichnet, dass** jede Seitenkante des Maskenkörpers (4) eine längliche vertikale Öffnung (10) aufweist, die ausgebildet ist, starr oder abnehmbar das Befestigungsende (13) eines Schenkels (5) aufzunehmen, wobei das Befestigungsende (13) eines jeden der Schenkel (5) zwei Verriegelungslaschen (14) aufweist, die starr oder beweglich nebeneinander angeordnet sind, um den Einbau der Schenkel (5) am Maskenkörper (4) zu ermöglichen, wobei jede Lasche (14) mit einem Kopf (35) mit abgeschrägten Enden (36) ausgestattet ist, um die Einführung der Laschen (14) durch die länglichen Durchtrittsöffnungen (10) zu ermöglichen und mit einer breiten Basis (37), um den Kopf (35) außerhalb der länglichen Öffnung (10) zu halten, ausgebildet ist.

2. Schablone gemäß Anspruch 1, dadurch gekennzeichent, dass sich jeder Schenkel (5) gegenüber dem Befestigungsende (13) derart entfernt, dass ein Vertauschen der Schenkel die Änderung des Abstandes der Schenkel (5) ermöglicht, so dass eine Anpassung der Schablone (2) an die Morphologie des Kopfes eines Kunden möglich ist.

3. Schablone gemäß Anspruch 1 oder 2, dadurch gekennzeichent, dass eine der Verriegelungslaschenen (14) jedes Befestinungsendes (13) der Schenkel (5) eine Nut (15) aufweist, deren Boden (16) mit einer Markierung (17) ausgebildet ist, wobei die Markierung (17) durch die längliche Öffnung (10) hindurch derart erkennbar ist, um die Einstellung eines breiten Kopfes oder schmalen Kopfes zu ermitteln.

4. Schablone gemäß einem der Ansprüche 1 bis 3, dadurch gekennzeichent, dass die innere Fläche des Maskenkörpers (4) eine Vielzahl von parallelen Spalten (21), bevorzugt angeordnet über der länglichen Öffnung (10), aufweist, wobei diese Spalten (21) mit einem Ankoppelmittel (20) kooperieren, welches an dem Beseftigungsende (13) der Schenkel (5) derart vorgesehen ist, dass die Position dieser nach oben oder unten in Bezug einer Vertikalposition der Schablone (2) mit getragenen Gläsern angekoppelt werden und die Höhe der Schenkel (5) durch die längliche Öffnung (10) des genannten Maskenkörpers (4) lokalisierbar ist.

5. Schablone gemäß einem der Ansprüche 1 bis 4, dadurch gekennzeichent, dass die äußeren und inneren Seiten der Schenkel (5) mit einem Markierungsmittel (11) über die gesamte Länge oder wenigstens über den hinteren Abschnitt der besagten Schenkel (5) versehen sind.

6. Schablone gemäß einem der Ansprüche 1 bis 5, dadurch gekennzeichent, dass die Markierungsmittel (11) als Zielmarkierung in einem präzisen und vorbestimmten Abstand zueinander angeordnet sind.

7. Schablone gemäß einem der Ansprüche 1 bis 6, dadurch gekennzeichent, dass jeder Schenkel (5) an seinem Befestigungsabschnitt mit dem Maskenkörper (4) der Schablone (2) eine Abbiegung (12) nach unten erfährt, die das Freilegen eines größeren Gesichtsbereiches derart ermöglicht, dass die wesentlichen sichtbaren Charakteristika des Auges und seiner Umgebung sichtbar machen.

8. Schablone gemäß einem der Ansprüche 1 bis 7, dadurch gekennzeichent, dass jeder Schenkel (5) an seinem Befestigungsabschnitt mit dem Maskenkörper (4) der Schablone (2) eine Markierung (22) aufweist, welche sich in Flucht mit der unteren geraden Kante des Schenkels (5) in Kontakt mit dem Ohr des Kunden befindet.

## Claims

1. A rigid template for producing prescription spectacles, the template (2) being formed by a facial portion (4) similar to a spectacles frame, comprising two spaced rings (6) connected by a bridge (8) and on each side of which a temple (5) is fixed or adapted to be fixed rigidly and removably, said facial portion (4) of the template (2) being provided with marking means (11) precisely positioned on the external surface of its two rings (6), **characterised in that** each lateral edge of the facial portion (4) comprises a vertical oblong opening (10) configured to rigidly and removably receive the fixing end (13) of a temple (5), the fixing end (13) of each of the temples has two rigid flexible latching tabs (14) disposed in mutually facing relationship to permit engagement of the temples (5) in the facial portion (4), each tab (14) being provided with a head (35) having a beveled end (36) to permit the tabs (14) to move towards each other when they pass into the oblong opening (10) and a wide base (37) to retain the head (35) on the outside of the oblong opening (10).

2. A template according to claim 1 **characterised in that** each temple (5) is eccentric with respect to the fixing end (13) in such a way that switching of the temples makes it possible to modify the spacing of the temples (5), thus enabling adaptation of the template (2) to the morphology of the head of the client.

3. A template according to either one of claims 1 and 2 **characterised in that** one of the latching tabs (14) of each fixing end (13) of the temples (5) comprises a notch (15) whose bottom (16) is provided with a marker (17), said marker (17) being identifiable through said oblong opening (10) so as to determine the wide-head or narrow-head position of a client.

4. A template according to any one of claims 1 to 3 **characterised in that** the internal face of the facial portion (4) comprises a plurality of parallel slots (21) which are preferably disposed above the oblong opening (10), said slots (21) cooperating with an attachment means (20) provided in the upper part (19) of the fixing end (13) of the temples (5) such that the position of the latter can be indexed upwardly or downwardly considering a vertical position of the spectacles template (2) being worn and that the heightwise position of the temples (5) can be marked through the oblong opening (10) of the facial portion (4).

5. A template according to any one of claims 1 to 4 **characterised in that** the external and internal faces of the two temples (5) are provided with marking means (11) distributed over their entire length or at least over a posterior portion of said temples (5).

6. A template according to any one of claims 1 to 5 **characterised in that** the marking means (11) are formed by targets placed at a precise and predetermined distance from each other.

7. A template according to any one of claims 1 to 6 **characterised in that** in its connecting portion to the facial portion (4) of the template (2) each temple (5) includes a downwardly oriented offset portion (12) making it possible to free up a large part of the region of the face so as to render visible the essential characteristics of the eye and its surroundings.

8. A template according to any one of claims 1 to 7 **characterised in that** in its connecting portion to the facial portion (4) of the template (2) each temple (5) comprises a marker (22) disposed in alignment with the lower straight edge of the temple (5) that is in contact with the ear of the client.
